# EUROPEAN PATENT SPECIFICATION

(11) **EP 1 978 336 B1**
(45) Date of publication and mention of the grant of the patent: **27.09.2017**
(21) Application number: 08006081.7
(22) Date of filing: 28.03.2008
(51) Int. Cl.: G01F 1/28, G01F 5/00, G01F 15/00

(54) **Flow rate adjusting and indicating valve device for a fluid**
Durchflussratenstell- und Anzeigeventilvorrichtung für ein Fluid
Dispositif de vanne à indication et réglage de débit pour un fluide

(30) Priority: 05.04.2007 IT MI20070703
(43) Date of publication of application: 08.10.2008
(73) Proprietor: CALEFFI S.p.A., Fontaneto d'Agogna, (NO) (IT)
(72) Inventor: Caleffi, Marco, 28021 Borgomanero (IT)
(74) Representative: Coloberti, Luigi

(56) References cited:
- EP-A1- 0 945 713
- CN-Y- 2 854 264
- DE-U1- 8 220 193
- GB-A- 2 073 893
- US-A- 3 805 611
- US-A- 4 787 253
- US-A- 4 986 133

## Description

### BACKGROUND OF THE INVENTION

This invention concerns a flow rate adjusting and indicating valve device for adjusting and indicating the flow rate of a fluid in a duct, which is particularly suitable for accurately adjusting and/or balancing the flow rate of a thermal fluid distributed to individual circuits or branches of a heating system.

### STATE OF THE ART

In general, in the heating system field, integrated valve devices are known and used, which are capable of providing an indication of the flow rate of a thermal fluid in a duct, and at the same time allowing the adjustment of the flow rate itself, in such a way as to be able to calibrate the system in relation to operative and/or design requirements.

A device of this kind is for example known from EP-A-0 945 713, which is conventionally connected along a pipe for feeding the thermal fluid to a circuit or to a riser of a heating system.

The device described in the aforementioned application, in particular comprises a flow passage duct having a flow rate adjusting valve for adjusting the passage of a fluid through the duct; in addition, a by-pass channel is provided, which is branched off between two axially spaced apart points of the duct, the by-pass channel in turn comprising means for indicating the flow rate of the fluid through the flow passage duct.

The indicating means in particular comprise a piston within a transparent central section of the by-pass channel, the piston being movably supported by a counter spring in such a way that, under the entraining effect of the fluid, which flows through by-pass channel due to a throttling effect in the passage duct, the piston can move to a position indicating the flow rate in the passage duct itself.

The device also comprises a first and a second normally closed on-off valve for stopping the flow through the by-pass channel, disposed respectively upstream and downstream to the aforesaid indicating means.

Each on-off valve is provided with a closing member movable within a respective cross connecting section of the by-pass channel which connects the same channel to the passage duct, and both the closing members are operatively connected, by means of respective connecting rods, to a single control yoke which has to be manually operated by pressure for opening the on-off valves.

The specific solution for controlling the closing members, however, does not guarantee that both the closing members are moved simultaneously, and involves burning risks for the operator when operating the control yoke without special protective gloves; in fact, in order to efficiently operate the control yoke, the operator's hand would also have to clasp the passage duct, which is subject to high temperatures, the same control yoke being also hot.

A further drawback of the device concerns the fact that the transparent section of the by-pass channel, through which the flow rate indication, provided by the position of the piston, is visible, tends to get dirty due to the impurities contained in the thermal fluid of the system; in fact, impurities and lime tend to deposit along time on the internal walls of the section itself, entailing difficulties in reading the flow rate.

Moreover, the transparent section of the by-pass channel is made of plastic material, which has a limited resistance at the high temperatures and pressures that can be generated in certain types of systems.

Lastly, the disposition of the adjusting valve, and the position of a check slider provided on one rear side of the flow rate indicator, give rise to considerable difficulties in fitting the insulating shells prescribed by the relevant European standard.

It is also known the use of magnetic type flow rate indicators, to be inserted in line along a pipe through which a fluid flows.

A flow rate indicator of this kind, for example known from US-A-3,805,611, comprises a duct for the passage of the fluid, made of non-magnetic metallic material, which houses a tubular piston supported by a counter spring to move under the entraining effect of the fluid.

The piston peripherally supports an annular permanent magnet which is magnetically coupled to a annular ferromagnetic element for indication of the flow rate, the annular indication element sliding coaxially along an outer side of the passage duct, and being protected by an outer sleeve made of transparent material.

A flow rate indicator of this kind, being inserted directly in line along a pipe forming part of a system, is subject to functional problems related to the rapid accumulation of sediment deriving from the continuous flow of fluid through the indicator itself.

Moreover, also due to the insertion in line of the indicator, the duct for the passage of the fluid must be appropriately dimensioned in order to withstand the high pressure values of the fluid which flows through the systems; however, a considerable thickness of the walls of the passage duct gives rise to a wider gap between the magnet and the ferromagnetic indicator element, which in turn entails the need to make use of a high-powered and consequently high-weight magnet, thereby preventing the possibility of fitting the indicator according to any vertical or horizontal direction, due to the decisive influence of the weight of the magnet itself with respect to the direction.

Moreover, the need to make use of a high-powered and high-weight magnet is also due to the annular shape of the magnet, which involves a greater dispersion of magnetic flux, and to the shape of the ferromagnetic indictor element, which gives rise to frictional problems during the sliding movement, as well as an increase in the weight of the latter.

A still further drawback of the aforementioned indicator is related to the fact that, in order to reduce the friction during the sliding of the ferromagnetic indicator element, it is necessary to machine the outer cylindrical surface of the duct for the passage of the fluid, with consequent higher manufacturing costs.

From US-A-4787253 a flow meter is known which uses a magnet inside to position an indicator ball; a scale is fixed to the outside of a transparent cover such that the indicator ball position can be read against it and flow through the meter discerned.

A valve with a control rod which is manually operated by pulling a gripping element in the form of a pull ring is known from CN 2854264.

### OBJECTS OF THE INVENTION

One object of this invention is to provide a flow-rate adjusting and indicating valve device, of the aforementioned kind, which enables the valve means for stopping the flow in the by-pass channel to be controlled safely, both as regards the risk of burns, and as regards the certainty of the correct operation of the valve means themselves.

A still further object of this invention is to provide a valve device of the aforementioned kind, in which the means for indicating the flow rate are structurally simple, and maintain their original characteristics of readability and their operation over time, and at the same time having a high resistance to high temperature and pressure values.

A further object of this invention is to provide a valve device of the aforementioned kind, in which the flow rate indicating means are designed in such a way as to allow the valve device to be fitted according to any orientation.

A still further object of this invention is to provide a valve device of the aforementioned kind, in which the insulating shells prescribed by the standard can be produced and fitted in a simple manner.

### BRIEF DESCRIPTION OF THE INVENTION

The foregoing can be achieved by means of a flow rate adjusting and indicating valve device for a fluid according to claim 1.

### BRIEF DESCRIPTION OF THE DRAWINGS

These and further features according to this invention, will be more clearly evident from the following description with reference to the accompanying drawings, in which:
- Fig. 1 shows a perspective view of the flow rate adjusting and indicating valve device according to this invention;
- Fig. 2 shows a longitudinal sectional view of the valve device of Fig. 1, with the on-off valve for stopping of the flow in the closed position;
- Fig. 3 shows a cross-sectional view of the by-pass channel of the device of Fig. 2, along the line 3-3;
- Fig. 4 shows a longitudinal sectional view of the valve device of Fig. 1, with the on-off valve for stopping of the flow in the open position; and
- Fig. 5 shows an exploded perspective view of the movable piston of the device, with the relevant counter spring and the side magnet.

### DETAILED DESCRIPTION OF THE INVENTION

The general characteristics of this invention will be illustrated hereunder by means of an embodiment.

Figures from 1 to 3 show a valve device for adjusting and indicating the flow rate of a fluid, according to this invention.

The device comprises a duct 10 for the passage of the fluid, which for example can be inserted or connected along a pipe for feeding hot water to a circuit or to a riser of a heating system, in such a way as to be able to carry out the calibration of the system itself.

The passage duct 10 in particular has an inlet 11 and an outlet 12 for the fluid, and is provided with a valve 13 for adjusting the flow rate, for example of the ball-type, preferentially disposed in a downstream position with respect to the direction of the flow.

The device also comprises a by-pass channel 14, branched off between a first side opening 15 in an upstream position and a second side opening 16 in a downstream position along the passage duct 10, which are axially spaced apart from one another along the duct 10 itself.

In order to create a differential pressure between the first and the second side openings 15, 16 of the passage duct 10, capable of allowing the generation of a flow of fluid through the by-pass channel 14, the duct 10 internally comprises a cross-section reducing sleeve 10' for reducing the cross-sectional area of flow in correspondence with the downstream opening 16, the reducing sleeve 10' having a side port 10" for connection with the opening 16 itself.

Preferentially, the valve 13 for adjusting the flow rate has a control stem 13' which extends along one side of the duct 10 corresponding to the side from which the by-pass channel 14 extends.

The by-pass channel 14, made of a non-magnetizable or non magnetically conductive metallic material, for example brass, is preferentially U-shaped, and comprises a rectilinear central section 14", parallel to the passage duct 10, and a first and a second short connecting sections 14', 14"' for connection to the duct 10, which extend in a crosswise direction from an upstream end and, respectively, from a downstream end of the central section 14" itself.

In particular, the first cross section or part 14' is connected to a first pipe fitting 17 provided on a side of the duct 10 in correspondence with the side opening 15, while the second cross section or part 14"' is connected to a second pipe fitting 18 provided on the same side of the duct 10 in correspondence with the side opening 16.

The device also comprises a normally-closed on-off valve 19, for stopping the flow through the by-pass channel 14, which in turn comprises, at one end of the channel 14 itself, a closing member 20 connected to a control rod 21 to be moved, by a manual operation for opening, between a closed position and an open position for the by-pass channel, in opposition to a counter spring 21', disposed coaxially to the control rod 21 and tending to maintain the closing member 20 closed.

The by-pass channel 14 includes a movable piston 22, entrained by the fluid in the channel itself; furthermore, the by-pass channel 14 is provided with the indicating means for indicating the flow rate of the fluid flowing through the passage duct 10, which comprise an indicating member 23 made of ferromagnetic material, preferentially in the form of a sphere 23 made of iron, which is movable in a guide channel 24, made of transparent material, longitudinally extending along one outer side of the by-pass channel 14.

As explained further on, the movement of the indicating member 23 along the guide channel 24 occurs thanks to the movable piston 22 which is magnetically coupled with the member 23 itself.

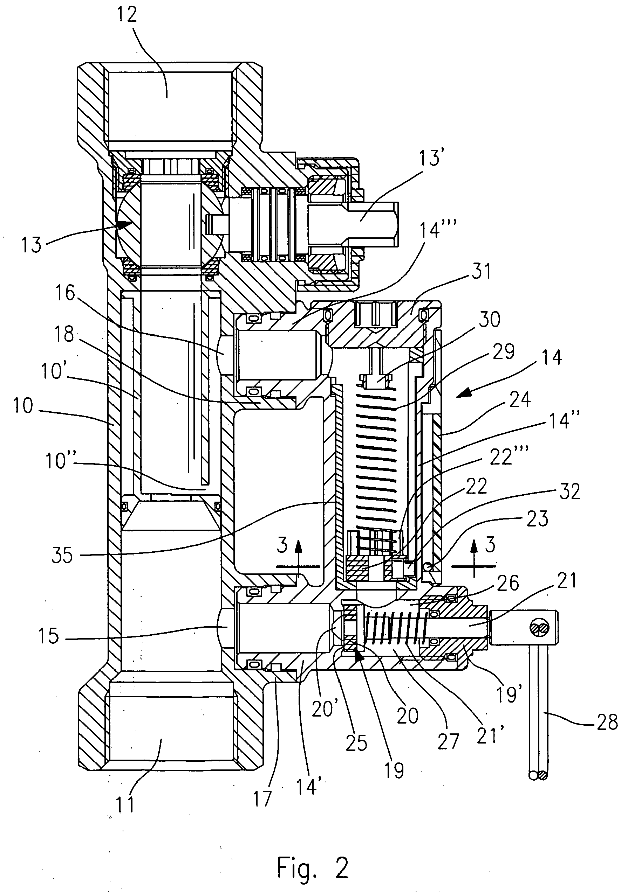

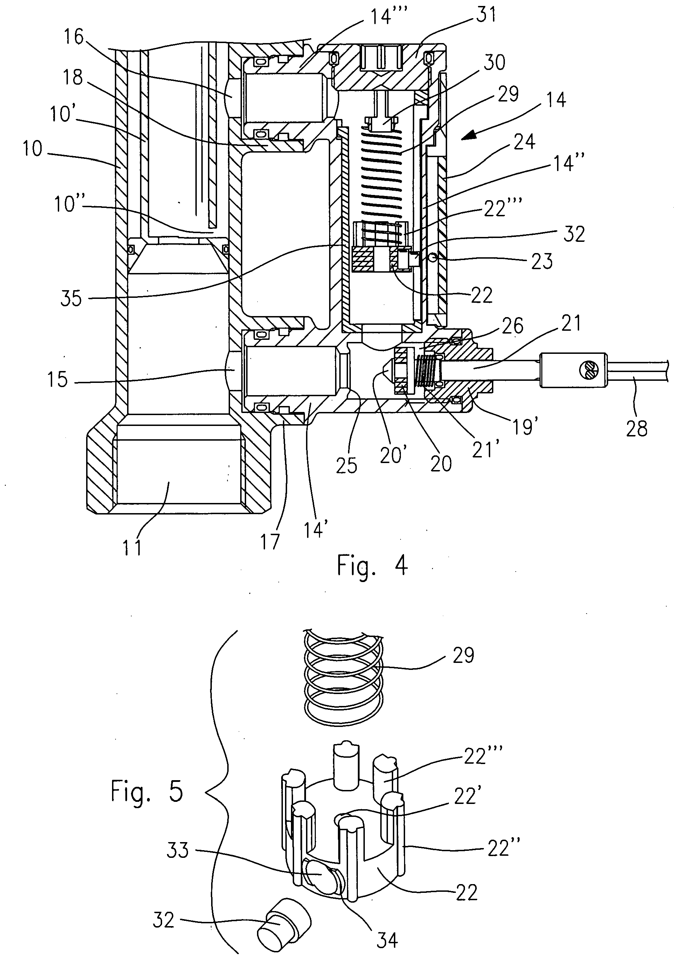

The control rod 21 is operated manually by pulling to cause the movement of the closing member 20 from a forward closed position in which it comes to rest against an annular sealing seat 25 in the by-pass channel 14, illustrated in Fig. 2, to a backward open position, illustrated in Fig. 4.

Preferentially, the by-pass channel 14 comprises a side cavity 26 in which the closing member 20 penetrates at least partially in correspondence with the backward open position, in such a way as to allow the free passage of the fluid within the channel 14 itself, in order to reduce flow resistances.

The closing member 20 is preferentially disposed in an upstream area of the channel 14, inside a chamber 27 in an intermediate position between the first connecting section 14' and the central section 14" of the by-pass channel, with the closing member 20 and the relevant rod 21 which extend coaxially to the first connecting section 14' itself.

The control rod 21 extends outwardly to the by-pass channel 14 through an annular guide member 19' for guiding the rod 21 which is removably tightly secured inside to a hole in the channel 14, on an opposite side with respect to the passage duct 10; the control rod 21 also ends with a manual gripping element 28, for example in the form of a pull ring 28, having high heat dissipating characteristics.

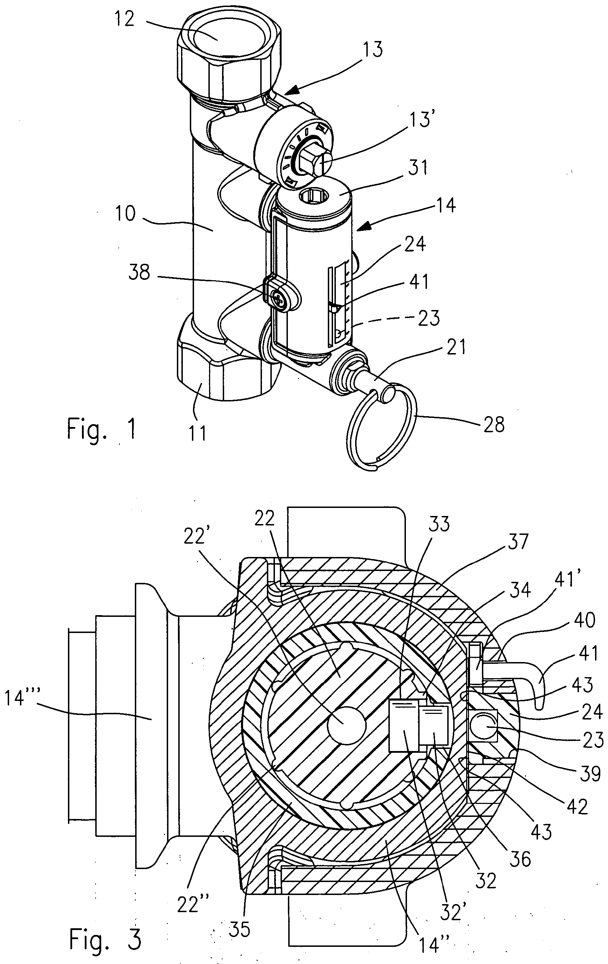

As illustrated in Figures 2 and 3, the piston 22 is movably supported in the central section 14" of the by-pass channel 14 by means of a counter spring 29 connected to a stop member or protrusion 30 for stopping the piston, which extends from a downstream end of the central section 14" itself starting from a cap 31 designed for closing an access opening to the by-pass channel.

For the purposes of the magnetic coupling with the ferromagnetic indicating member 23, the movable piston 22 comprises in particular a permanent magnet 32 on one side facing towards the indicating member 23 itself.

The permanent magnet 32 preferentially has a cylindrical body which extends in a radial direction on the side of the piston facing towards the indicating member 23; the magnet 32 also has a retaining head 32' securable in a laterally opened cavity 33 of the piston 22 by means of re-flanging of lips 34 disposed at the sides of the cavity 33 itself on the outer surface of the piston 22.

Due to the aforementioned shape and disposition of the magnet 32, it is possible to limit the leakages of magnetic flux in the coupling with the indicating member 23, thereby enabling the use of a magnet having less power and light weight.

The central section 14" preferentially comprises an inner guide sleeve 35 for guiding the movable piston 22, which is made from material having a low friction coefficient, for example from plastic material with low roughness and high thermal stability, the piston 22 itself being made of the same material.

The guide sleeve 35 has a longitudinal slit 36 for the passage of the permanent magnet 32 of the piston 22, which performs an anti-rotation guiding function for guiding the piston 22 itself, in such a way that the magnet 32 always remains facing towards the indicating member 23.

As illustrated in Fig. 3, the movable piston 22 has an axial hole 22' for the passage of the fluid, and a plurality of longitudinal sliding ribs 22", disposed spaced apart from one another on the outer peripheral side of the piston 22, which define a plurality of peripheral passages for the fluid circumferentially arranged between the piston 22 and the guide sleeve 35.

Moreover, as illustrated in Fig. 2 and Fig. 5, the piston 22 preferentially comprises a plurality of guiding legs 22"' which extend in an axial direction from the circumferential edge of one face of the piston 22, which prevent any misalignment of the latter, and are shaped and disposed to retain one end of the counter spring 29.

Moreover, this conformation of the piston 22, which has no closed recessed areas, prevents the stagnation or accumulation of water on the piston itself.

Preferentially, the closing member 20 is provided on one front side with a shaped protrusion 20', for example, truncated cone shaped, whereby it is possible to deviate and guide the flow from the first connecting section 14' towards the central section 14" of the by-pass channel 14, in correspondence with the backward position of the closing member 20 itself.

As illustrated in Fig. 3, in order to allow the correct positioning of the guide channel 24, the by-pass channel 14 and the guide channel 24 itself have appropriately shaped corresponding contact surfaces, which preferentially comprise a flat contacting surface 42 on one front side of the central section 14" of the by-pass channel 14 and at least one flat contacting surface on one rear side of the guide channel 24.

In the case illustrated, in which the guide channel 24 has a U-shaped cross section open towards the by-pass channel 14, two flat contacting surfaces 43 are provided, which extend longitudinally in correspondence with the rear ends of the guide channel 24 itself.

The flat surface 42 on the front side of the by-pass channel 14 can for example be obtained by simply milling, without the need to have to machine the other outer parts of the by-pass channel.

In this way it is possible to obtain a reduction in thickness of the front side of the channel 14 itself, which gives rise to a decrease in the gap between the magnet 32 and the indicating member 23, making it possible to use a magnet having limited power and weight; moreover, the flat surface 42 machined on the by-pass channel 14 also defines a guiding surface for guiding the indicating member 23.

Preferentially, the guide channel 24 for guiding the indicating member 23 is secured to the central section 14" of the by-pass channel 14, on one side opposite the passage duct 10, by means of a tampographed retaining half-shell 37 which is secured to the channel 14 itself by means of screws 38; as illustrated in Fig. 3, the half-shell 37, always on the opposite side with respect to the passage duct 10, has a first longitudinal slit 39, through which extends the guide channel 24 to be visible from the outside, and a second slit 40, adjacent and parallel to the first, in which a pointer 41, in the form of an arrow, slides in a guided way, which can be manually positioned along a reference scale, not shown, provided on the shell 37, in such as way as to facilitate the calibration of the system.

The pointer 41 is preferentially provided with a guiding foot 41' which slides on the front surface 42 of the by-pass channel 14.

Moreover, the front surface 42 of the by-pass channel 14 is provided with an adhesive or a layer of contrasting clear varnish, in such as way as to facilitate the identification of the position of the indicating member 23.

From the foregoing description it is evident that, with the flow rate adjusting and indicating valve device according to this invention, it is possible to safely operate the on-off valve for stopping of the flow in the by-pass channel, both as far as the risk of burns is concerned, and as far as the certainty of the correct opening of the valve itself is concerned, thanks to the single control which can be operated by pulling.

In addition, the valve device according to this invention is provided with means for indicating the flow rate disposed outside the by-pass channel and consequently are not affected by the flow of water and maintain their original characteristics in terms of readability over time; in this way it is possible to produce the by-pass channel in brass, and no longer in transparent plastic material as in the state of the art, thereby achieving a high resistance to high temperature and pressure values for the by-pass channel itself.

Moreover, due the fact that the stem for operating the flow rate adjusting valve, the ring for operating the on-off valve, the transparent guide channel for guiding the indicating sphere, and the pointer arrow, are all disposed on one front side of the device, it is possible to easily produce and apply the insulating shells contemplated by the standard.

Lastly, the conformation of the piston supporting the magnet, which allows to limit the weight of the latter and at the same time to prevent stagnation or accumulation of water, enables the device to be installed in any variously oriented position, for example with the flow directed upwards, or vice versa, or in a horizontal direction.

What has been described and shown with reference to the accompanying drawings, has been given purely by way of example in order to illustrate the general characteristics of the invention, and of one of its preferential embodiments; therefore other modifications and variations may be made to the flow rate adjusting and indicating valve device, without thereby deviating from the scope of the claims.

## Claims

1. Flow rate adjusting and indicating valve device for a fluid, comprising:
- a duct (10) for the passage of the fluid;
- a flow rate adjusting valve (13) for adjusting the flow rate in said passage duct (10);
- a by-pass channel (14) branched off from said passage duct (10);
- normally closed on-off valve means (19) for stopping the flow through the by-pass channel (14), the on-off valve means (19) being manually operable for opening; and
- means (22, 23, 24) for indicating the flow rate of the fluid through the passage duct (10), said indicating means (22, 23, 24) comprising a movable piston (22) entrained by the fluid in the by-pass channel (14),
said on-off valve means (19) comprising, at one end of the by-pass channel (14), a closing member (20) connected to a control rod (21) to be manually moved between a closed position and an open position for the by-pass channel (14),
**characterised in that**
said indicating means (22, 23, 24) for indicating the flow rate comprising a guide channel (24) made of transparent material, longitudinally extending along one outer side of the by-pass channel (14), and an indicating member (23) made of ferromagnetic material, movable within said guide channel (24), and
the piston (22) movable in the by-pass channel (14) comprising a permanent magnet (32) arranged on one side of the same piston (22), the permanent magnet (32) being magnetically coupled with the indicating member (23) for moving the latter along the guide channel (24),
wherein the control rod (21) for controlling the closing member (20) is shaped and disposed to be manually operated by pulling to cause the movement of the closing member (20) from a forward closed position against an annular sealing seat (25) in the by-pass channel (14), to a backward open position, and
wherein the control rod (21) of the closing member (20) extends outwardly to the by-pass channel (14) on an opposite side with respect to said passage duct (10), said rod (21) being provided with a manual gripping element (28) in the form of a pull ring having high heat dissipating characteristics.

2. Flow rate adjusting and indicating valve device according to claim 1, in which the by-pass channel (14) comprises a central section (14") for housing and supporting the indicating means (22, 23, 24) for indicating the flow rate, and a first and second connecting sections (14', 14"') for connecting the by-pass channel (14) to the passage duct (10), said connecting sections (14', 14"') extending transversally from an upstream end, and, respectively, from a downstream end of the central section (14"), **characterised in that** the closing member (20) is disposed in an intermediate chamber (27) between the first connecting section (14') and the central section (14") of the by-pass channel (14), said closing member (20) extending coaxially to the first connecting section (14') itself.

3. Flow rate adjusting and indicating valve device according to claim 2, **characterised in that** said piston (22) is movably supported within said central section (14") of the by-pass channel (14) by means of a counter spring (29) connected to a stop member (30) for the piston (22), the stop member (30) being disposed at a downstream end of the central section (14") itself.

4. Flow rate adjusting and indicating valve device according to any one of the previous claims, **characterised in that** said permanent magnet (32) extends in a radial direction along one side of the movable piston (22) facing towards said indicating member (23), said permanent magnet (32) having a cylindrical shape provided with a retaining head (32') that fits into a side cavity (33) of the piston (22).

5. Flow rate adjusting and indicating valve device according to any one of the previous claims, **characterised in that** said indicating member (23) for indicating the flow rate is in the form of a sphere made of iron.

6. Flow rate adjusting and indicating valve device according to any one of the previous claims from 2 to 5, **characterised in that** said central section (14") comprises an inner guide sleeve (35) for guiding the movable piston (22), the guide sleeve (35) and the piston (22) being made of material with a low friction coefficient.

7. Flow rate adjusting and indicating valve device according to claim 6, **characterised in that** said guide sleeve (35) has a longitudinal slit (36) for the passage of said permanent magnet (32) of the piston (22).

8. Flow rate adjusting and indicating valve device according to any one of the previous claims, **characterised in that** said movable piston (22) has an axial hole (22') for the passage of the fluid, and longitudinal sliding ribs (22"), disposed spaced apart from one another on the outer peripheral side of the piston (22), said longitudinal sliding ribs (22") defining a plurality of peripheral passages for the fluid disposed circumferentially to the piston.

9. Flow rate adjusting and indicating valve device according to any one of the previous claims, in which the piston (22) is movably supported by a counter spring (29), **characterised in that** said piston (22) comprises a plurality of guiding legs (22"') which extend in an axial direction from the circumferential edge of one face of the piston (22), said guiding legs (22"') being shaped and disposed in such a way as to retain one end of said counter spring (29).

10. Flow rate adjusting and indicating valve device according to any one of the previous claims from 2 to 9, **characterised in that** the closing member (20) is provided on one front side with a shaped protrusion (20') for deviating the flow from said first connecting section (14') towards the central section (14") of the by-pass channel (14), in correspondence with said backward position of the closing member (20) itself, said by-pass channel (14) comprising a side cavity (26) in which the closing member (20) penetrates at least partially in correspondence with said backward open position.

11. Flow rate adjusting and indicating valve device according to any one of the previous claims, **characterised by** comprising corresponding contacting surfaces (42, 43) between the by-pass channel (14) and the guide channel (24) for guiding said flow rate indicating member (23), said contacting surfaces (42, 43) comprise a flat contacting surface (42) on one front side of the by-pass channel (14) and at least one flat contacting surface (43) on one rear side of the guide channel (24).

12. Flow rate adjusting and indicating valve device according to any one of the previous claims, **characterised by** comprising a retaining half-shell (37) for retaining said guide channel (24), the retaining half-shell (37) being removably secured to the by-pass channel (14), on one side opposite the passage duct (10).

13. Flow rate adjusting and indicating valve device according to any one of the previous claims, in which the flow rate adjusting valve (13) is provided with a control stem (13'), and in which a sliding pointer (41) is provided for said indicating member (23), **characterised in that** the control stem (13') of the flow rate adjusting valve (13), the control rod (21) of the on-off closing member (20), the transparent guide channel (24) for guiding the indicating member (23), and the pointer (41), are all disposed on a same front side of the device.

## Patentansprüche

1. Ventilvorrichtung für die Einstellung und Anzeige des Volumenstroms für eine Flüssigkeit, umfassend:
- eine Leitung (10) für den Durchfluss der Flüssigkeit
- ein Einstellventil (13) für den Volumenstrom für die Einstellung des Volumenstroms in der besagten Durchflussleitung (10);
- einen Seitenkanal (14), der von der besagten Durchflussleitung (10) abzweigt;
- normalerweise geschlossene Einschaltventilanlage (19), um den Durchfluss durch den Seitenkanal aufzuhalten (14), wobei die Einschaltventilanlage (19) zum Öffnen manuell betätigt werden kann; und
- Instrumente (22, 23, 24) für das Anzeigen des Volumenstroms der Flüssigkeit durch die Durchflussleitung (10), wobei die besagten Instrumente (22, 23, 24) einen beweglichen Kolben (22) umfassen, der von der Flüssigkeit im Seitenkanal (14) mitgeführt wird,
die besagte Einschaltventilanlage (19) umfassend, an einem Ende des Seitenkanals (14), ein Verschlussteil (20), das mit einem Steuerstab (21) verbunden, welcher manuell zwischen einer geschlossenen Position und einer offenen Position für den Seitenkanal (14) bewegt werden kann,
**dadurch gekennzeichnet, dass**
die besagten Anzeigeninstrumente (22, 23, 24) für das Anzeigen des Volumenstroms einen Führungskanal (24) umfassen, der aus transparentem Material besteht und sich in Längsrichtung auf einer Außenseite des Seitenkanals (14) erstreckt, und ein Anzeigeteil (23) aus ferromagnetischem Material, das sich in besagtem Führungskanal (24) bewegt, wobei sich der Kolben (22) in besagtem Seitenkanal (14) bewegt, umfassend einen Permanentmagneten (32), der auf einer Seite desselben Kolbens (22) angeordnet ist, wobei der Permanentmagnet (32) magnetisch mit dem Anzeigeteil (23) gekoppelt ist, um Letzteres entlang des Führungskanals (24) zu bewegen,
wobei der Steuerstab (21) für das Steuern des Verschlussteils (20) so geformt und angeordnet ist, dass er durch Ziehen manuell betätigt werden kann, um die Bewegung des Verschlussteils (20) von einer vorwärts geschlossenen Position gegen einen ringförmigen Dichtsitz (25) im Seitenkanal (14) in eine rückwärts offene Position zu verursachen, und wobei der Steuerstab (21) des Verschlussteils (20) sich nach außen zum Seitenkanal (14) auf einer gegenüberliegenden Seite in Bezug auf die besagte Durchflussleitung (10) erstreckt, wobei der besagte Stab (21) über ein manuelles Greifelement (28) in Form eines Zugrings mit hohen Wärmeableitungseigenschaften verfügt.

2. Ventilvorrichtung für die Einstellung und Anzeige des Volumenstroms nach Anspruch 1, wobei der Seitenkanal (14) einen mittleren Abschnitt (14") für die Unterbringung und das Abstützen der Anzeigeinstrumente (22, 23, 24) für das Anzeigen des Volumenstroms, sowie einen ersten und zweiten Anschlussabschnitt (14', 14"') für den Anschluss des Seitenkanals (14) an die Durchflussleitung (10) umfasst, wobei die besagten Anschlussabschnitte (14', 14"') sich quer laufend von einem stromaufwärtigen Ende bzw. von einem stromabwärtigen Ende des mittleren Abschnittes (14") erstrecken, **dadurch gekennzeichnet, dass** das Verschlussteil (20) in einer Zwischenkammer (27) zwischen dem ersten Anschlussabschnitt (14') und dem mittleren Abschnitt (14") des Seitenkanals (14) angeordnet ist, wobei das besagte Verschlussteil (20) sich koaxial zu dem ersten Anschlussabschnitt (14') selbst erstreckt.

3. Ventilvorrichtung für die Einstellung und Anzeige des Volumenstroms nach Anspruch 2, **dadurch gekennzeichnet, dass** der besagte Kolben (22) in dem besagten mittleren Abschnitt (14") des Seitenkanals (14) durch eine Konterfeder (29) bewegbar getragen wird, die mit einem Stoppteil (30) für den Kolben (22) verbunden ist, wobei das Stoppteil (30) an einem stromabwärtigen Ende des mittleren Abschnitts (14") selbst untergebracht ist.

4. Ventilvorrichtung für die Einstellung und Anzeige des Volumenstroms nach einem der vorstehenden Ansprüche, **dadurch gekennzeichnet, dass** der besagte Permanentmagnet (32) sich in radialer Richtung auf der einen Seite des beweglichen Kolbens (22), dem Anzeigeteil (23) zugewandt, erstreckt, wobei der besagte Permanentmagnet (32) eine zylindrische Form mit einem Haltekopf (32') hat, der in den Seitenhohlraum (33) des Kolbens (22) passt.

5. Ventilvorrichtung für die Einstellung und Anzeige des Volumenstroms nach einem der vorstehenden Ansprüche, **dadurch gekennzeichnet, dass** das besagte Anzeigeteil (23) für das Anzeigen des Volumenstroms die Form einer Kugel aus Eisen hat.

6. Ventilvorrichtung für die Einstellung und Anzeige des Volumenstroms nach einem der vorstehenden Ansprüche 2 bis 5, **dadurch gekennzeichnet, dass** der besagte mittlere Abschnitt (14") eine innere Führungshülse (35) für die Führung des beweglichen Kolbens (22) umfasst, wobei die Führungshülse (35) und der Kolben (22) aus einem Material mit einem niedrigen Reibungskoeffizienten bestehen.

7. Ventilvorrichtung für die Einstellung und Anzeige des Volumenstroms nach Anspruch 6, **dadurch gekennzeichnet, dass** die besagte Führungshülse (35) einen länglichen Schlitz (36) für den Durchlass des besagten Permanentmagneten (32) des Kolbens (22) hat.)

8. Ventilvorrichtung für die Einstellung und Anzeige des Volumenstroms nach einem der vorstehenden Ansprüche, **dadurch gekennzeichnet, dass** der besagte bewegliche Kolben (22) über eine Axialbohrung (22') für den Durchfluss der Flüssigkeit und über längsgerichtete Gleitrippen (22") verfügt, die mit einem Abstand zueinander auf der äußeren Peripherieseite des Kolbens (22) angeordnet sind, wobei die besagten längsgerichteten Gleitrippen (22") eine Vielzahl von Peripheriedurchgängen für die Flüssigkeit definieren, die so angeordnet sind, dass sie den Kolben umlaufen.

9. Ventilvorrichtung für die Einstellung und Anzeige des Volumenstroms nach einem der vorstehenden Ansprüche, wobei der Kolben (22) bewegbar von einer Konterfeder (29) getragen wird, **dadurch gekennzeichnet, dass** der besagte Kolben (22) eine Vielzahl von Führungsbeinen (22"') umfasst, die sich in axialer Richtung von der umlaufenden Kante einer Stirnseite des Kolbens (22) erstrecken, wobei die besagten Führungsbeine (22"') so geformt und angeordnet sind, dass sie das eine Ende der besagten Konterfeder (29) halten.

10. Ventilvorrichtung für die Einstellung und Anzeige des Volumenstroms nach einem der vorstehenden Ansprüche 2 bis 9, **dadurch gekennzeichnet, dass** das Verschlussteil (20) auf einer Vorderseite über eine geformte Vorwölbung (20') für das Umleiten des Flusses von dem besagten ersten Anschlussabschnitt (14') zu dem mittleren Abschnitt (14") des Seitenkanals (14) verfügt, in Übereinstimmung mit der besagten Rückwärtsposition des Verschlussteils (20) selbst, wobei der besagte Seitenkanal (14) einen seitlichen Hohlraum (26) hat, in den das Verschlussteil (20) zumindest teilweise entsprechend der besagten rückwärts offenen Position eindringt.

11. Ventilvorrichtung für die Einstellung und Anzeige des Volumenstroms nach einem der vorstehenden Ansprüche, **dadurch gekennzeichnet, dass** sie übereinstimmende Kontaktflächen (42, 43) zwischen dem Seitenkanal (14) und dem Führungskanal (24) für das Führen des besagten Anzeigeteils für den Volumenstrom (23) umfasst, wobei die Kontaktflächen (42, 43) eine flache Kontaktfläche (42) auf einer Vorderseite des Seitenkanals (14) und mindestens eine flache Kontaktfläche (43) auf einer Rückseite des Führungskanals (24) umfassen.

12. Ventilvorrichtung für die Einstellung und Anzeige des Volumenstroms nach einem der vorstehenden Ansprüche, **dadurch gekennzeichnet, dass** sie eine Halte-Halbschale (37) für das Halten des besagten Führungskanals (24) umfasst, wobei die Halte-Halbschale (37) auf einer Seite gegenüber der Durchflussleitung (10) herausnehmbar am Seitenkanal (14) befestigt ist.

13. Ventilvorrichtung für die Einstellung und Anzeige des Volumenstroms nach einem der vorstehenden Ansprüche, wobei das Ventil für die Einstellung des Volumenstroms (13) mit einer Spindel (13') versehen ist und wobei ein Gleitzeiger (41) für das besagte Anzeigeteil (23) vorhanden ist, **dadurch gekennzeichnet, dass** die Spindel (13') des Ventils für die Einstellung des Volumenstroms (13), der Steuerstab (21) des Einschalt-Verschlussteils (20), der transparente Führungskanal (24) für das Führen des Anzeigeteils (23) und der Zeiger (41) alle auf der gleichen Vorderseite der Vorrichtung angeordnet sind.

## Revendications

1. Dispositif de vanne d'ajustement et d'indication de débit pour un fluide, comprenant :
- un conduit (10) pour le passage du fluide ;
- une vanne d'ajustement de débit (13) pour ajuster le débit dans ledit conduit de passage (10) ;
- un canal de dérivation (14) bifurqué depuis ledit conduit de passage (10) ;
- des moyens de vanne marche-arrêt (19) normalement fermés pour arrêter l'écoulement à travers le canal de dérivation (14), les moyens de vanne marche-arrêt (19) pouvant être actionnés manuellement pour l'ouverture ; et
- des moyens (22, 23, 24) pour indiquer le débit du fluide à travers le conduit de passage (10), lesdits moyens d'indication (22, 23, 24) comprenant un piston mobile (22) entraîné par le fluide dans le canal de dérivation (14),
lesdits moyens de vanne marche-arrêt (19) comprenant, à une extrémité du canal de dérivation (14), un élément de fermeture (20) connecté à une tige de commande (21) pour être manuellement déplacée entre une position fermée et une position ouverte pour le canal de dérivation (14)
**caractérisé en ce que**
lesdits moyens d'indication (22, 23, 24) pour indiquer le débit comprennent un canal de guidage (24) constitué d'un matériau transparent, s'étendant longitudinalement le long d'un côté extérieur du canal de dérivation (14), et un élément d'indication (23) constitué d'un matériau ferromagnétique, mobile à l'intérieur dudit canal de guidage (24), et
le piston (22) mobile dans le canal de dérivation (14) comprend un aimant permanent (32) agencé sur un côté du même piston (22), l'aimant permanent (32) étant magnétiquement couplé à l'élément d'indication (23) pour déplacer celui-ci le long du canal de guidage (24),
dans lequel la tige de commande (21) destinée à commander l'élément de fermeture (20) est formée et disposée pour être actionnée manuellement en tirant afin de provoquer le déplacement de l'élément de fermeture (20) depuis une position fermée avant contre une assise d'étanchéité annulaire (25) dans le canal de dérivation (14), jusqu'à une position ouverte arrière, et
dans lequel la tige de commande (21) de l'élément de fermeture (20) s'étend vers l'extérieur vers le canal de dérivation (14) sur un côté opposé par rapport audit conduit de passage (10), ladite tige (21) étant munie d'un élément de saisie manuel (28) sous la forme d'un anneau de traction ayant des caractéristiques élevées de dissipation de chaleur.

2. Dispositif de vanne d'ajustement et d'indication de débit selon la revendication 1,
dans lequel le canal de dérivation (14) comprend une section centrale (14") pour héberger et supporter les moyens d'indication (22, 23, 24) pour indiquer le débit, et une première et une seconde section de connexion (14', 14'") pour connecter le canal de dérivation (14) au conduit de passage (10), lesdites sections de connexion (14', 14"') s'étendant transversalement à partir d'une extrémité amont, et, respectivement, depuis une extrémité aval de la section centrale (14"),
**caractérisé en ce que** l'élément de fermeture (20) est disposé dans une chambre intermédiaire (27) située entre la première section de connexion (14') et la section centrale (14") du canal de dérivation (14), ledit élément de fermeture (20) s'étendant de manière coaxiale avec la première section de connexion (14') elle-même.

3. Dispositif de vanne d'ajustement et d'indication de débit selon la revendication 2,
**caractérisé en ce que** ledit piston (22) est supporté de manière mobile à l'intérieur de ladite section centrale (14") du canal de dérivation (14) au moyen d'un ressort de rappel (29) connecté à un élément d'arrêt (30) pour le piston (22), l'élément d'arrêt (30) étant disposé au niveau d'une extrémité aval de la section centrale (14") elle-même.

4. Dispositif de vanne d'ajustement et d'indication de débit selon l'une quelconque des revendications précédentes, **caractérisé en ce que** ledit aimant permanent (32) s'étend dans une direction radiale le long d'un côté du piston mobile (22) faisant face audit élément d'indication (23), ledit aimant permanent (32) ayant une forme cylindrique munie d'une tête de retenue (32') qui s'ajuste dans une cavité latérale (33) du piston (22).

5. Dispositif de vanne d'ajustement et d'indication de débit selon l'une quelconque des revendications précédentes, **caractérisé en ce que** ledit élément d'indication (23) pour indiquer le débit a la forme d'une sphère constituée de fer.

6. Dispositif de vanne d'ajustement et d'indication de débit selon l'une quelconque des revendications 2 à 5, **caractérisé en ce que** ladite section centrale (14") comprend une gaine de guidage intérieure (35) pour guider le piston mobile (22), la gaine de guidage (35) et le piston (22) étant constitués d'un matériau ayant un faible coefficient de frottement.

7. Dispositif de vanne d'ajustement et d'indication de débit selon la revendication 6,
**caractérisé en ce que** ladite gaine de guidage (35) a une fente longitudinale (36) pour le passage dudit aimant permanent (32) du piston (22).

8. Dispositif de vanne d'ajustement et d'indication de débit selon l'une quelconque des revendications précédentes, **caractérisé en ce que** ledit piston mobile (22) a un trou axial (22') pour le passage du fluide, et des nervures coulissantes longitudinales (22"), disposées en étant espacées les unes des autres sur le côté périphérique extérieur du piston (22), lesdites nervures coulissantes longitudinales (22") définissant une pluralité de passages périphériques pour le fluide disposés de manière circonférentielle par rapport au piston.

9. Dispositif de vanne d'ajustement et d'indication de débit selon l'une quelconque des revendications précédentes, dans lequel le piston (22) est supporté de manière mobile par un ressort de rappel (29), **caractérisé en ce que** ledit piston (22) comprend une pluralité de jambes de guidage (22"') qui s'étendent dans une direction axiale depuis le bord circonférentiel d'une face du piston (22), lesdites jambes de guidage (22"') étant formées et disposées de manière à retenir une extrémité dudit ressort de rappel (29).

10. Dispositif de vanne d'ajustement et d'indication de débit selon l'une quelconque des revendications 2 à 9, **caractérisé en ce que** l'élément de fermeture (20) est agencé sur un côté avant ayant une saillie formée (20') pour dévier l'écoulement depuis ladite première section de connexion (14') vers la section centrale (14") du canal de dérivation (14), en correspondance avec ladite position arrière de l'élément de fermeture (20) lui-même, ledit canal de dérivation (14) comprenant une cavité latérale (26) dans laquelle l'élément de fermeture (20) pénètre au moins partiellement en correspondance avec ladite position ouverte arrière.

11. Dispositif de vanne d'ajustement et d'indication de débit selon l'une quelconque des revendications précédentes, **caractérisé en ce qu'**il comprend des surfaces de contact correspondantes (42, 43) entre le canal de dérivation (14) et le canal de guidage (24) pour guider ledit élément d'indication de débit (23), lesdites surfaces de contact (42, 43) comprennent une surface de contacte plate (42) sur un côté avant du canal de dérivation (14) et au moins une surface de contact plate (43) sur un côté arrière du canal de guidage (24).

12. Dispositif de vanne d'ajustement et d'indication de débit selon l'une quelconque des revendications précédentes, **caractérisé en ce qu'**il comprend une demi-coque de retenue (37) pour retenir ledit canal de guidage (24), la demi-coque de retenue (37) étant attachée de manière amovible au canal de dérivation (14), sur un côté opposé au conduit de passage (10).

13. Dispositif de vanne d'ajustement et d'indication de débit selon l'une quelconque des revendications précédentes, dans lequel la vanne d'ajustement de débit (13) est muni d'une barre de commande (13'), et dans lequel un pointeur coulissant (41) est fourni pour ledit élément d'indication (23), **caractérisé en ce que** la barre de commande (13') de la vanne d'ajustement de débit (13), la tige de commande (21) de l'élément de fermeture marche-arrêt (20), le canal de guidage transparent (24) pour guider l'élément d'indication (23), et le pointeur (41), sont tous disposés sur un même côté avant du dispositif.
